# EUROPÄISCHE PATENTSCHRIFT

(11) **EP 1 873 425 B1**
(45) Veröffentlichungstag und Bekanntmachung des Hinweises auf die Patenterteilung: **24.12.2008**
(21) Anmeldenummer: 07006636.0
(22) Anmeldetag: 30.03.2007
(51) Int. Cl.: F16H 63/30

(54) **Hydraulische Stellvorrichtung für die Betätigung einer Schaltstange insbesondere eines Schaltgetriebes für Kraftfahrzeuge**
Hydraulic adjustment device for operating a control rod, in particular of manual transmission for motor vehicles
Dispositif de réglage hydraulique pour l'actionnement d'une tige de commutation, en particulier d'un changement de vitesse pour véhicules automobiles

(30) Priorität: 29.06.2006 DE 102006030450
(43) Veröffentlichungstag der Anmeldung: 02.01.2008
(73) Patentinhaber: FTE automotive GmbH, 96106 Ebern (DE)
(72) Erfinder: Reul, Alexander, 96158 Frensdorf (DE); Stößel, Roland, 97514 Oberaurach (DE); Macht, Egid, 81247 München (DE)
(74) Vertreter: Oppermann, Mark

(56) Entgegenhaltungen:
- EP-A- 1 164 316
- EP-A- 1 477 711
- DE-A1- 19 543 646
- DE-B- 1 023 282
- DE-B- 1 205 390
- GB-A- 1 287 259
- US-A- 2 318 757

## Beschreibung

### TECHNISCHES GEBIET

Die Erfindung bezieht sich auf eine hydraulische Stellvorrichtung für die Betätigung einer Schaltstange gemäß dem Oberbegriff des Patentanspruchs 1. Insbesondere bezieht sich die Erfindung auf eine hydraulische Stellvorrichtung für die Betätigung einer Schaltstange eines Schaltgetriebes für Kraftfahrzeuge, wie sie z.B. für automatisierte Schaltgetriebe massenweise in der Automobilindustrie Verwendung finden. Eine derartige Stellvorrichtung dient beispielsweise dazu, eine an einer Schaltstange des Getriebes befestigte Schaltgabel für einen Gangwechsel zu betätigen, d.h. zu verschieben und ggf. zu positionieren.

### STAND DER TECHNIK

Aus der gattungsbildenden DE-A-195 43 646 ist für eine Gruppenschaltung von einem mechanischen Schaltgetriebe in einem Fahrzeug eine pneumatisch oder hydraulisch betriebene, doppeltwirkende Schaltvorrichtung bekannt, die einen an einem Gehäuse des Schaltgetriebes angeflanschten Schaltzylinder aufweist. Der Schaltzylinder hat einen Arbeits- bzw. Zylinderraum zur Aufnahme eines Schaltkolbens, an dem eine Kolben- bzw. Schaltstange mittels einer Schraubverbindung befestigt ist. Der Schaltkolben unterteilt den Zylinderraum des Schaltzylinders in zwei Arbeitskammern, die wahlweise über jeweils eine Druckleitung aus einem Vorratsbehälter mit einem Druckmittel beaufschlagbar sind, um den Schaltkolben und damit die Schaltstange zu verschieben. Am äußeren Umfang des Schaltkolbens verhindert eine Dichtungsanordnung jeglichen Austausch von Druckmittel zwischen den Arbeitskammern. Zur "Dämpfung" des Anschlags des Schaltkolbens in seinen Endpositionen im Zylinderraum ist in einer Bohrung des Schaltkolbens ein in der Seitenansicht im wesentlichen I-förmiger Schieber angeordnet, der kurz vor Erreichen der jeweiligen Endposition des Schaltkolbens einen Durchlaßkanal im Schaltkolben für kurze Zeit öffnet, um eine Verbindung zwischen den beiden Arbeitskammern herzustellen, ansonsten aber, d.h. in den Endpositionen des Schaltkolbens und dessen anderen Zwischenpositionen diese Verbindung unterbricht. Damit bewirkt der Schieber kurz vor Erreichen der jeweiligen Endposition des Schaltkolbens einen "Druckfluß" zwischen den Arbeitskammern, der zu einer Verlangsamung der Bewegung des Schaltkolbens und damit einem "sanfteren" Anschlag des Schaltkolbens in seiner Endposition führt.

Solche Schaltvorrichtungen werden insbesondere auch dazu benutzt, die Schaltstange axial in eine von drei verschiedenen vorbestimmten Positionen zu schieben bzw. zu ziehen, nämlich zwei Endstellungen und eine dazwischen liegende Mittelstellung. Die Stellwege bzw. -positionen werden hierbei an der Schaltstange mit Hilfe eines elektrischen Meßsystems erfaßt, wobei die erfaßten Werte dazu verwendet werden, die Schaltstange durch geeignete Druckbeaufschlagung des als Stellglied wirkenden Schaltzylinders über elektrisch angesteuerte Hydraulikventile in die gewünschte Stellung zu verfahren. Die Schaltstange wird in der jeweils angefahrenen, vorbestimmten Arbeits- bzw. Schaltstellung zusätzlich mechanisch arretiert, z.B. mittels einer federvorgespannten Kugel, die in eine zugeordnete Kerbe in der Schaltstange einschnappt, wobei die mechanische Arretierung durch Aufbringen einer größeren Kraft an der Schaltstange überdrück- bzw. überziehbar ist, so daß der derart eingesetzte Schaltzylinder selbst nicht als die Schaltstange in der jeweiligen Schaltstellung haltender Verriegelungs- oder Spannzylinder dienen muß, sondern lediglich als hydraulischer Antrieb für die Schaltstange.

Bei hydraulischem Betrieb einer solchen Schaltvorrichtung besteht das Problem, daß die Schaltvorrichtung aufgrund ihrer nur schwer zugänglichen oder sogar unzugänglichen Lage am Getriebegehäuse schwierig zu entlüften ist, namentlich dann, wenn die Schaltvorrichtung vor der Erstinbetriebnahme oder im Reparaturfalle mit dem hydraulischen Druckmittel befüllt und gespült werden muß. Erschwerend kommt hier noch hinzu, daß als hydraulisches Druckmittel für derartige Schaltvorrichtungen oftmals das Getriebeöl genutzt wird, welches in seiner Hauptbestimmung als Schmier- und Kühlmittel für das Schaltgetriebe in der Ölwanne des Getriebes zwar ausreichend vorhanden ist, aufgrund des ständigen Umlaufs durch die sich drehenden Getriebeteile und Zahnräder und die dadurch verursachte Aufschäumung jedoch mit vielen Luftblasen versetzt ist. Wird die Schaltvorrichtung mit solchem Getriebeöl betrieben, ist eine ausreichende Entlüftung des Schaltzylinders aber notwendig, damit z.B. die obigen drei Arbeits- bzw. Schaltstellungen der Schaltstange ohne lufteinschlußbedingte Funktionsbeeinträchtigung angefahren werden können.

Weitere Stellvorrichtungen mit Entlüftung sind aus den Druckschritten US-A-2 318 757 und DE-A-1 205 390 bekannt.

### DARSTELLUNG DER ERFINDUNG

Der Erfindung liegt die Aufgabe zugrunde, eine möglichst kostengünstig ausgebildete hydraulische Stellvorrichtung für die Betätigung einer Schaltstange insbesondere eines Schaltgetriebes für Kraftfahrzeuge zu schaffen, die auf tunlichst einfache und effiziente Weise entlüftet werden kann.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 18.

Gemäß der Erfindung ist bei einer hydraulischen Stellvorrichtung für die Betätigung einer Schaltstange insbesondere eines Schaltgetriebes für Kraftfahrzeuge, welche Stellvorrichtung einen in oder an einem Getriebegehäuse vorgesehenen Zylinderraum zur Aufnahme eines mit der Schaltstange wirkverbundenen Schaltkolbens aufweist, der den Zylinderraum in zwei wahlweise aus einem Vorratsraum für ein Druckmittel mit diesem beaufschlagbare Arbeitskammern unterteilt, die mittels einer am Schaltkolben angeordneten Dichtungsanordnung voneinander getrennt sind, wobei der Zylinderraum von einer Zylinderwandung begrenzt ist, die als Lauffläche für die Dichtungsanordnung dient; der Zylinderraum durch einen Einsatz gebildet, der in eine Stufenbohrung des Getriebegehäuses eingesetzt ist und einen Mantelabschnitt hat, der mit seinem Innenumfang die Zylinderwandung bildet, wobei die Dichtungsanordnung ventilartig ausgebildet ist, so daß sie bei Druckmittelbeaufschlagung wenigstens einer Arbeitskammer diese mit einem von der Dichtungsanordnung begrenzten Hilfsraum verbindet, der seinerseits mit dem Vorratsraum für das Druckmittel verbindbar ist.

Infolge dieser Ausgestaltung der Stellvorrichtung wird bei Druckmittelbeaufschlagung wenigstens einer Arbeitskammer die sich darin ggf. befindende Luft mit der sich über die Dichtungsanordnung einstellenden Strömung des Druckmittels zwischen besagter Arbeitskammer und dem Hilfsraum in den Hilfsraum mitgerissen, von wo die Luft weiter mit dem Druckmittel in den Vorratsraum für das Druckmittel gelangen kann. Es findet also eine gewollte (geringe) Leckage an der ventilartig ausgebildeten Dichtungsanordnung von dieser druckmittelbeaufschlagten Arbeitskammer in den zur temporären Luftaufnahme vorgesehenen Hilfsraum statt, so daß diese druckmittelbeaufschlagte Arbeitskammer auf denkbar einfache Art und Weise zwangsentlüftet wird. Im Ergebnis können sich in den Arbeitskammern der Stellvorrichtung keine Luftansammlungen bilden, die die Funktion der Stellvorrichtung beeinträchtigen könnten.

Der Vorratsraum für das Druckmittel, etwa die Ölwanne des Getriebes oder - im Falle einer vom Getriebeschmier- bzw. -kühlkreislauf getrennten Druckmittelversorgung für die Stellvorrichtung - ein separater Vorratsbehälter, in den die in der Stellvorrichtung ggf. vorhandene Luft letztendlich befördert wird, läßt sich leicht entlüften bzw. ist ohnehin mit einer Einrichtung zur kontinuierlichen Entlüftung ausgestattet. Somit sind zusätzliche Maßnahmen zur Entlüftung - seien es herkömmliche Einzel-Entlüfter am nicht oder nur schwer zugänglichen Zylinderraum jeder Stellvorrichtung des Schaltgetriebes und/ oder zeitaufwendige Einzel-Entlüftungs- bzw. Spülroutinen bei Erstinbetriebnahme oder im Reparaturfalle der jeweiligen Stellvorrichtung - in vorteilhafter Weise entbehrlich.

Die Ausgestaltung der erfindungsgemäßen Stellvorrichtung mit dem den Zylinderraum bildenden Einsatz ist hierbei einer einfachen und kostengünstigen Herstellung weiter förderlich und hat auch nur einen geringen Bauraumbedarf.

In zweckmäßiger Ausgestaltung kann die Dichtungsanordnung der erfindungsgemäßen Stellvorrichtung zwei Dichtungen aufweisen, die jeweils zwischen einer der Arbeitskammern und dem Hilfsraum der Stellvorrichtung angeordnet sind. Hierbei kann die erforderliche Ventilfunktion der Dichtungsanordnung auf vorteilhaft einfache Weise dadurch gewährleistet werden, daß jede Dichtung eine elastische Dichtlippe aufweist, die im Ruhezustand der Stellvorrichtung an einer Zylinderwandung des Zylinderraums anliegt, die, wenn der hydraulische Druck in der jeweils angrenzenden Arbeitskammer um einen vorbestimmten Betrag größer ist als der hydraulische Druck in dem Hilfsraum, von der Zylinderwandung wegbiegbar ist, um einen Durchlaß für das Druckmittel freizugeben, und die, wenn der hydraulische Druck in dem Hilfsraum um einen vorbestimmten Betrag größer ist als der hydraulische Druck in der jeweils angrenzenden Arbeitskammer, an die Zylinderwandung anpreßbar ist, um gegenüber der Zylinderwandung abzudichten. Bei diesen Dichtungen kann es sich um an sich bekannte Nutringe handeln, die entgegengesetzt zu ihrer üblichen Einbaulage am Schaltkolben montiert sind, was besonders kostengünstig ist, weil im Handel erhältliche Massenartikel verwendet werden können.

Im weiteren Verfolg des Erfindungsgedankens kann die hydraulische Verbindung zwischen dem Hilfsraum der Stellvorrichtung und dem Vorratsraum wenigstens eine Drosselstelle aufweisen. Durch geeignete Dimensionierung der Drosselstelle läßt sich die vorerwähnte gewollte Leckage an der Dichtungsanordnung der Stellvorrichtung vorteilhaft auf ein Minimum reduzieren. Dabei muß für eine dauerhaft ordnungsgemäße Entlüftung der Arbeitskammern der Stellvorrichtung allerdings gewährleistet bleiben, daß die Strömungsgeschwindigkeit des Druckmittels in dem Hilfsraum größer ist als die Geschwindigkeit, mit der die Lufteinschlüsse bzw. -blasen im Druckmittel im Hilfsraum aufsteigen können.

Um das Volumen des Hilfsraums am Schaltkolben zu begrenzen, kann ferner vorgesehen sein, daß der Schaltkolben wenigstens einen im wesentlichen radial verlaufenden Kanal mit zwei Enden aufweist, von denen das eine Ende in dem Hilfsraum mündet, während an dem anderen Ende die Drosselstelle vorgesehen ist.

In einer Variante der erfindungsgemäßen Stellvorrichtung, bei der die Druckmittelversorgung für die Stellvorrichtung an den Schmier- bzw. Kühlkreislauf des Getriebes angeschlossen ist, kann der Schaltkolben einen hohlen Kolbenschaft aufweisen, der die Schaltstange umgibt und sich an seinem Außenumfang dynamisch abgedichtet in das Getriebegehäuse hinein erstreckt, wobei zwischen dem Innenumfang des Kolbenschafts und der Schaltstange wenigstens ein Kanal ausgebildet ist, der den Hilfsraum hydraulisch mit dem Inneren des Getriebegehäuses verbindet. Hierbei kann der Kanal zwischen Kolbenschaft und Schaltstange grundsätzlich am Außenumfang des Kolbenschafts ausgebildet sein. Im Hinblick auf eine möglichst kostengünstige Herstellung des Kanals bevorzugt ist aber eine Ausgestaltung, bei der der Kanal zwischen Kolbenschaft und Schaltstange am Innenumfang des Kolbenschafts ausgebildet ist. Bei dieser Variante kann die erfindungsgemäße Stellvorrichtung in herstellungstechnisch einfacher Ausgestaltung weiterhin so ausgebildet sein, daß der Kolbenschaft im Inneren des Getriebegehäuses an einem Bund der Schaltstange endet, wobei der Kolbenschaft an seiner dem Bund der Schaltstange zugewandten Stirnseite mit wenigstens einer Ausnehmung versehen ist, die den Kanal zwischen Kolbenschaft und Schaltstange mit dem Inneren des Getriebegehäuses hydraulisch verbindet.

In einer anderen Variante der erfindungsgemäßen Stellvorrichtung, bei der die Stellvorrichtung eine vom Getriebeschmier- bzw. -kühlkreislauf getrennte Druckmittelversorgung aufweist, kann der Hilfsraum über einen Verbindungskanal dauerhaft mit einer der Arbeitskammern hydraulisch verbunden sein, während diese Arbeitskammer ihrerseits über eine Blende permanent mit dem Vorratsraum hydraulisch verbunden ist. Wird bei dieser Variante diejenige Arbeitskammer druckmittelbeaufschlagt, die nicht über den Verbindungskanal mit dem Hilfsraum verbunden ist, so gelangt das etwaige Lufteinschlüsse aus dieser Arbeitskammer mitnehmende Druckmittel über die ventilartig ausgebildete Dichtungsanordnung in den Hilfsraum und von dort über den Verbindungskanal in die andere Arbeitskammer. Wird in der Folge letztere Arbeitskammer druckmittelbeaufschlagt, so herrscht aufgrund der durch den Verbindungskanal bewirkten dauerhaften Verbindung zwischen dieser Arbeitskammer und dem Hilfsraum in dieser Arbeitskammer und dem Hilfsraum der gleiche Druck, weshalb über die ventilartig ausgebildete Dichtungsanordnung keine Druckmittelströmung zwischen dieser Arbeitskammer und dem Hilfsraum entsteht. Vielmehr erfolgt dann aus dieser Arbeitskammer über die zusätzliche Blende eine bewußte Leckage des Druckmittels in den Vorratsraum, welche Leckage die Lufteinschlüsse im Druckmittel aus dieser Arbeitskammer in den Vorratsraum für das Druckmittel weiterbefördert. Zweckmäßig verläuft bei dieser anderen Variante der erfindungsgemäßen Stellvorrichtung der Verbindungskanal im wesentlichen axial im Schaltkolben, wobei der Verbindungskanal mit einem Ende in der zugeordneten Arbeitskammer mündet, während der Verbindungskanal an seinem anderen Ende über die vorerwähnte Drosselstelle mit dem im wesentlichen radial verlaufenden Kanal im Schaltkolben hydraulisch verbunden ist. Grundsätzlich kann die dem Inneren des Getriebegehäuses nächstgelegene Arbeitskammer über den Verbindungskanal mit dem Hilfsraum verbunden sein. Im Hinblick auf eine einfache Anbringung bzw. Montage der Blende bevorzugt ist es aber, wenn es sich bei besagter, d.h. der über den Verbindungskanal zum Hilfsraum dauerhaft verbundenen Arbeitskammer um diejenige Arbeitskammer handelt, die auf der vom Inneren des Getriebegehäuses abgewandten Seite des Schaltkolbens liegt.

Bevorzugt ist weiterhin eine Ausgestaltung der erfindungsgemäßen Stellvorrichtung, bei der der Einsatz in der Stufenbohrung im Getriebegehäuse mittels eines am Getriebegehäuse befestigten Deckels fixiert ist. Hierbei kann der Einsatz vorteilhaft im wesentlichen becherförmig ausgebildet sein, mit einem Boden, der eine zentrale Öffnung für den Durchtritt der Schaltstange aufweist und mit einer Stufe der Stufenbohrung im Getriebegehäuse einen Ringkanal begrenzt, der mit einem Steueranschluß für die dem Inneren des Getriebegehäuses nächstgelegene Arbeitskammer kommuniziert, wobei der Boden des Einsatzes mit einer Mehrzahl von über den Umfang verteilten Durchbrüchen versehen ist, die die dem Inneren des Getriebegehäuses nächstgelegene Arbeitskammer mit dem Ringkanal verbinden, was auf einfache Weise für einen großen Verbindungsquerschnitt zwischen dem Steueranschluß und dieser Arbeitskammer sorgt und zudem eine winkelmäßig unausgerichtete Montage des Einsatzes in der Stufenbohrung des Getriebegehäuses gestattet. Vorteilhaft kann der Einsatz auch dazu dienen, einen die Schaltstange umgebenden hohlen Kolbenschaft des Schaltkolbens zu führen.

Schließlich ist es hinsichtlich einer kostengünstigen Herstellung ohne die Notwendigkeit einer Nachbearbeitung bevorzugt, wenn der Einsatz und/oder der Schaltkolben aus einem Kunststoff spritzgegossen ist. Dabei hat sich insbesondere im Hinblick auf eine gute Abriebfestigkeit als Werkstoff für den Einsatz bzw. den Schaltkolben Polyphthalamid (PPA) mit einem vorbestimmten Glasfaseranteil, etwa PPA mit 50% Glasfaseranteil, als vorteilhaft erwiesen.

### KURZE BESCHREIBUNG DER ZEICHNUNGEN

Im folgenden wird die Erfindung anhand bevorzugter Ausführungsbeispiele unter Bezugnahme auf die beigefügten, teilweise schematischen Zeichnungen näher erläutert, wobei gleiche oder entsprechende Teile mit den gleichen Bezugszeichen versehen sind. In den Zeichnungen zeigen:
- Fig. 1: eine abgebrochene Längsschnittansicht einer erfindungsgemäßen hydraulischen Stellvorrichtung nach einem ersten Ausführungsbeispiel in einem Schaltgetriebe für Kraftfahrzeuge, deren Druckmittelversorgung an den Schmier- bzw. Kühlkreislauf des Getriebes angeschlossen ist, in einem gegenüber den realen Abmessungen vergrößerten Maßstab,
- Fig. 2: eine abgebrochene Schnittansicht der Stellvorrichtung nach dem ersten Ausführungsbeispiel entsprechend der Schnittverlaufslinie II-II in Fig. 1,
- Fig. 3: eine vergrößerte Ansicht des Details III in Fig. 1,
- Fig. 4: eine vergrößerte Ansicht des Details IV in Fig. 1,
- Fig. 5: eine abgebrochene Längsschnittansicht einer erfindungsgemäßen hydraulischen Stellvorrichtung nach einem zweiten Ausführungsbeispiel in einem Schaltgetriebe für Kraftfahrzeuge, deren Druckmittelversorgung nicht an den Schmier- bzw. Kühlkreislauf des Getriebes angeschlossen ist, sondern an einen hiervon separaten Kreislauf, in einem gegenüber den realen Abmessungen vergrößerten Maßstab,
- Fig. 6: eine abgebrochene Schnittansicht der Stellvorrichtung nach dem zweiten Ausführungsbeispiel entsprechend der Schnittverlaufslinie VI-VI in Fig. 5 und
- Fig. 7: eine vergrößerte Ansicht des Details VII in Fig. 5.

In den Zeichnungen sind elastische bzw. elastomere Bauteile, namentlich die statischen und dynamischen Dichtungen zur Vereinfachung der Darstellung im unverformten Zustand gezeigt; in Wirklichkeit liegen diese verformbaren Bauteile an den benachbarten Flächen angrenzender Bauteile an. Ferner zeigen die Zeichnungen die Stellvorrichtung nach dem ersten bzw. zweiten Ausführungsbeispiel in einem nicht mit einem Druckmittel beaufschlagten (Ruhe)Zustand.

### DETAILLIERTE BESCHREIBUNG DER AUSFÜHRUNGSBEISPIELE

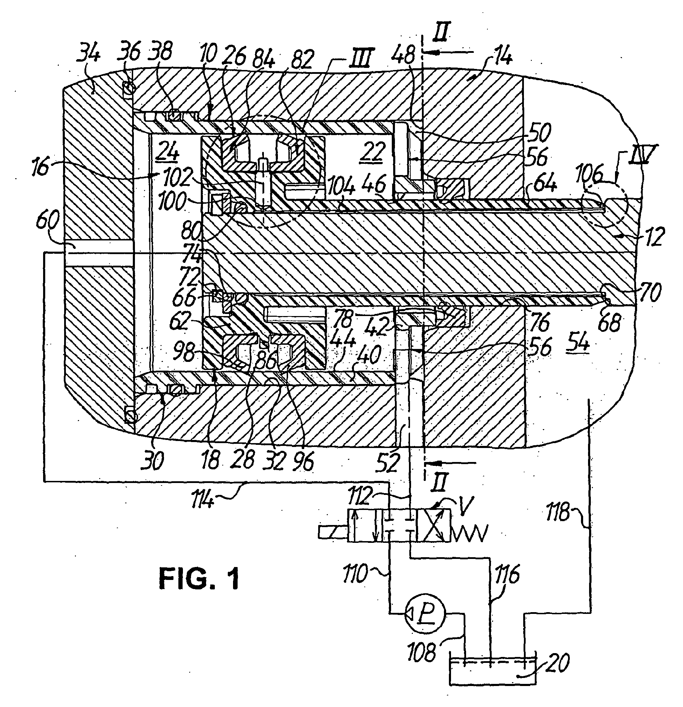

Die Fig. 1 zeigt eine hydraulische Stellvorrichtung 10 für die Betätigung, d.h. axiale Verschiebung einer Schaltstange 12 in einem Schaltgetriebe für Kraftfahrzeuge, dessen Getriebegehäuse in den Figuren mit 14 beziffert ist. Im Getriebegehäuse 14 ist ein Zylinderraum 16 zur Aufnahme eines mit der Schaltstange 12 wirkverbundenen Schaltkolbens 18 vorgesehen. Der Schaltkolben 18 unterteilt den Zylinderraum 16 in zwei wahlweise aus einem lediglich schematisch dargestellten Vorratsraum 20 für ein Druckmittel, im vorliegenden Fall ein Hydrauliköl, mit dem Druckmittel beaufschlagbare Arbeitskammern 22, 24, die mittels einer am Schaltkolben 18 angeordneten Dichtungsanordnung 26 voneinander getrennt sind. Wesentlich ist, wie nachfolgend noch näher erläutert werden wird, daß die Dichtungsanordnung 26 ventilartig ausgebildet ist, so daß sie bei Druckmittelbeaufschlagung wenigstens einer Arbeitskammer 22, 24 diese mit einem von der Dichtungsanordnung 26 begrenzten Hilfsraum 28 verbindet, der seinerseits mit dem Vorratsraum 20 für das Druckmittel verbindbar ist, um für eine kontinuierliche (Zwangs)Entlüftung der Arbeitskammern 22, 24 über den Hilfsraum 28 zum Vorratsraum 20 hin zu sorgen.

Im dargestellten Ausführungsbeispiel ist der Zylinderraum 16 durch einen Einsatz 30 gebildet, der in eine Stufenbohrung 32 im Getriebegehäuse 14 eingesetzt und in dieser mittels eines am Getriebegehäuse 14 auf nicht näher gezeigte Art und Weise befestigten Deckels 34 fixiert ist. Dabei ist der Zylinderraum 16 zur Umgebung hin vermittels eines O-Rings 36 statisch abgedichtet, der zwischen dem Deckel 34 und dem Getriebegehäuse 14 in einem ringförmigen Einstich am Deckel 34 angeordnet ist. Ein in einer Radialnut am Außenumfang des Einsatzes 30 angeordneter O-Ring 38 dichtet den Einsatz 30 gegenüber der Stufenbohrung 32 im Getriebegehäuse 14 statisch ab, um an dieser Stelle die im Einsatz 30 gebildeten Arbeitskammern 22, 24 hydraulisch dicht voneinander zu trennen.

Der vorzugsweise aus einem Kunststoff wie Polyphtalamid (PPA) mit einem vorbestimmten Glasfaseranteil, z.B. 50%, durch Spritzgießen hergestellte Einsatz 30 ist im wesentlichen becherförmig ausgebildet, mit einem Mantelabschnitt 40 und einem sich daran in Fig. 1 nach rechts anschließenden Boden 42. Der Mantelabschnitt 40 des Einsatzes 30 bildet mit seinem Innenumfang eine Zylinderwandung 44 als Lauffläche für die Dichtungsanordnung 26 am Schaltkolben 18 aus. Der Boden 42 des Einsatzes 30 weist eine zentrale Öffnung 46 für den Durchtritt der Schaltstange 12 auf und begrenzt zusammen mit einer Stufe 48 der Stufenbohrung 32 im Getriebegehäuse 14 einen Ringkanal 50. Letzterer kommuniziert mit einem in Fig. 1 schematisch dargestellten Steueranschluß 52 für die dem Inneren 54 des Getriebegehäuses 14 nächstgelegene Arbeitskammer 22. Der Boden 42 des Einsatzes 30 ist ferner mit einer Mehrzahl von gleichmäßig winkelbeabstandet über den Umfang verteilten Durchbrüchen 56 versehen, die durch Stege 58 voneinander getrennt sind und die dem Inneren 54 des Getriebegehäuses 14 nächstgelegene Arbeitskammer 22 ständig mit dem Ringkanal 50 verbinden (in den Figuren sind die Durchbrüche 56 und Stege 58 am Boden 42 des Einsatzes 30 der besseren Übersichtlichkeit halber nicht sämtlich mit Bezugszeichen gekennzeichnet). Demgemäß kann die in Fig. 1 rechte Arbeitskammer 22 der Stellvorrichtung 10 über den Steueranschluß 52, den Ringkanal 50 und die Durchbrüche 56 im Boden 42 des Einsatzes 30 mit dem Druckmittel beaufschlagt werden. Zur Druckmittelbeaufschlagung der in Fig. 1 linken Arbeitskammer 24 der Stellvorrichtung 10 ist der Deckel 34 mit einem ebenfalls nur schematisch gezeigten zentralen Steueranschluß 60 versehen.

Gemäß Fig. 1 handelt es sich bei dem Schaltkolben 18 um einen Schaftkolben, der vorzugsweise ebenfalls aus einem Kunststoff wie Polyphtalamid (PPA) mit einem vorbestimmten Glasfaseranteil, z.B. 50%, durch Spritzgießen hergestellt ist, mit einem Kolbenteil 62 und einem hohlen Kolbenschaft 64. Der Kolbenschaft 64 ist auf einen Absatz 66 der Schaltstange 12 aufgesteckt und an letzterer in axialer Richtung gesichert, wobei der Kolbenschaft 64 in Fig. 1 rechts mit seiner Stirnseite 68 an einem Bund 70 der Schaltstange 12 anliegt, während der Schaltkolben 18 in Fig. 1 links mittels eines geschlitzten Sicherungsrings 72, der in eine am Absatz 66 der Schaltstange 12 vorgesehene Radialnut eingreift, und einer Ringscheibe 74 im wesentlichen spielfrei gegengehalten ist. Der Kolbenschaft 64 erstreckt sich zusammen mit der Schaltstange 12 durch eine Öffnung 76 im Getriebegehäuse 14 hindurch in das Innere 54 des Getriebegehäuse 14 hinein. Hierbei ist der die Schaltstange 12 umgebende Kolbenschaft 64 an seinem Außenumfang mittels eines Dichtelements 78 dynamisch abgedichtet, welches in dem der Öffnung 76 benachbarten Abschnitt der Stufenbohrung 32 im Getriebegehäuse 14 aufgenommen und dort vermittels des Bodens 42 des Einsatzes 30 gehalten ist. Schließlich ist der Ringscheibe 74 benachbart ein O-Ring 80 in einer Aussparung des Schaltkolbens 18 aufgenommen, um für eine statische Abdichtung zwischen der Innenumfangsfläche des Kolbenschafts 64 und der Außenumfangsfläche des Absatzes 66 der Schaltstange 12 und damit an dieser Stelle zwischen der Arbeitskammer 24 und dem Inneren 54 des Getriebegehäuses 14 zu sorgen.

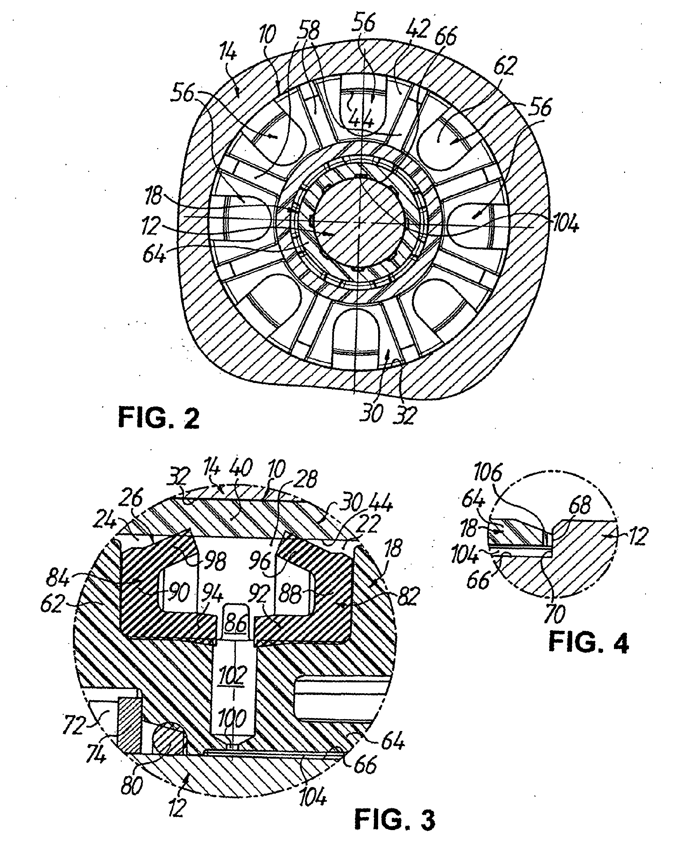

Wie die Fig. 1 und 3 zeigen, weist der Kolbenteil 62 außenumfangsseitig einen Durchmesser auf, der etwas kleiner ist als der Innendurchmesser der Zylinderwandung 44 des Einsatzes 30, und ist dort in axialer Richtung gesehen im wesentlichen mittig mit einer Ringaussparung versehen, die zum einen der Aufnahme der Dichtungsanordnung 26 am Schaltkolben 18 dient und zum anderen den ringförmigen Hilfsraum 28 bildet. Gemäß insbesondere Fig. 3 umfaßt die Dichtungsanordnung 26 zwei Dichtungen 82, 84, die jeweils zwischen einer der Arbeitskammern 22, 24 und dem Hilfsraum 28 angeordnet und voneinander vermittels eines am Kolbenteil 62 belassenen Radialstegs 86 getrennt sind.

Bei den Dichtungen 82, 84 handelt es sich um an sich bekannte elastische bzw. elastomere Nutringe, die entgegengesetzt zu ihrer üblichen Einbaulage am Schaltkolben 18 montiert sind, wie insbesondere die Fig. 3 zeigt, jeweils mit einem Grundkörper 88, 90, von dem sich in im wesentlichen V-förmiger Anordnung eine radial innere statische Dichtlippe 92 bzw. 94 und eine radial äußere dynamische Dichtlippe 96 bzw. 98 wegerstrecken. Bei der vorgesehenen Einbaulage der Dichtungen 82, 84 können sich diese über ihre statischen Dichtlippen 92, 94 an dem Radialsteg 86 des Kolbenteils 62 abstützen, während die dynamischen Dichtlippen 96, 98 der Dichtungen 82, 84 den Hilfsraum 28 begrenzend einander gegenüberliegen. Infolge dieser Anordnung der Dichtungen 82, 84 und dem Umstand, daß, wie eingangs bereits erwähnt wurde und nachfolgend noch näher beschrieben werden wird, der Hilfsraum 28 einen letztendlich zum Vorratsraum 20 führenden Ausgang für das Druckmittel aufweist, ergibt sich eine ventilartige Funktion der Dichtungsanordnung 26: Im in den Figuren dargestellten Ruhezustand der Stellvorrichtung 10 liegen die dynamischen Dichtlippen 96, 98 der Dichtungen 82, 84 mit einer gewissen Vorspannung an der Zylinderwandung 44 des Zylinderraums 16 an. Übersteigt bei einer Druckmittelbeaufschlagung einer Arbeitskammer 22 bzw. 24 der hydraulische Druck in dieser den hydraulischen Druck in dem Hilfsraum 28 um einen vorbestimmten Betrag, wird die an die druckmittelbeaufschlagte Arbeitskammer 22 bzw. 24 angrenzende dynamische Dichtlippe 96 bzw. 98 von der Zylinderwandung 44 weggebogen und gibt einen Durchlaß für das Druckmittel frei. Übersteigt hingegen der hydraulische Druck in dem Hilfsraum 28 den hydraulischen Druck in einer angrenzenden Arbeitskammer 22 bzw. 24 um einen vorbestimmten Betrag, was z.B. bei einer Druckmittelbeaufschlagung der Arbeitskammer 22 bezüglich der nicht-druckmittelbeaufschlagten Arbeitskammer 24 der Fall ist, wird die an die nichtdruckmittelbeaufschlagte Arbeitskammer 24 bzw. 22 angrenzende dynamische Dichtlippe 98 bzw. 96 gegen die Zylinderwandung 44 gepreßt, um gegenüber der Zylinderwandung 44 abzudichten.

Wie den Fig. 1 und 3 ferner zu entnehmen ist, weist die hydraulische Verbindung zwischen dem Hilfsraum 28 und dem Vorratsraum 20 (wenigstens) eine Drosselstelle 100 auf. Genauer gesagt hat der Kolbenteil 62 des Schaltkolbens 18 (wenigstens) einen im wesentlichen radial verlaufenden, den Radialsteg 86 durchsetzenden Kanal 102 mit zwei Enden, von denen das eine, d.h. das radial äußere Ende in dem Hilfsraum 28 mündet, während an dem anderen, d.h. an dem radial inneren Ende die Drosselstelle 100 vorgesehen ist.

Wie des weiteren aus den Fig. 1, 2 und 3 ersichtlich ist, ist zwischen dem Kolbenschaft 64 und dem Absatz 66 der Schaltstange 12 (wenigstens) ein in Längsrichtung verlaufender Kanal 104 ausgebildet, der den Hilfsraum 28 hydraulisch mit dem Inneren 54 des Getriebegehäuses 14 verbindet. Genauer gesagt ist der Kanal 104 zwischen Kolbenschaft 64 und Schaltstange 12 am Innenumfang des Kolbenschafts 64 ausgebildet und steht an seinem in Fig. 1 linken Ende mit der Drosselstelle 100 in Verbindung, während er an seinem in Fig. 1 rechten Ende im Inneren 54 des Getriebegehäuses 14 an dem Bund 70 der Schaltstange 12 endet. Dort ist gemäß den Fig. 1 und 4 der Kolbenschaft 64 an seiner dem Bund 70 der Schaltstange 12 zugewandten Stirnseite 68 mit (wenigstens) einer Ausnehmung 106 versehen, die letztendlich den Kanal 104 mit dem Inneren 54 des Getriebegehäuses 14 hydraulisch verbindet.

Die vorbeschriebene Stellvorrichtung 10 wird nun ausgehend vom Vorratsraum 20 wie folgt mit dem Druckmittel versorgt. An den Vorratsraum 20 ist eine Hydraulikpumpe P eingangsseitig über eine Ansaugleitung 108 angeschlossen. Die Hydraulikpumpe P ist ausgangsseitig über eine Druckleitung 110 mit dem Druckanschluß eines elektromagnetisch betätigbaren 4/2-Wegeventils V verbunden, welches in seine in Fig. 1 gezeigte Sperrstellung federvorgespannt ist. Die in Fig. 1 oben liegenden zwei Arbeitsanschlüsse des 4/2-Wegeventils V sind über zugeordnete Hydraulikleitungen 112 und 114 mit dem Steueranschluß 52 für die in Fig. 1 rechte Arbeitskammer 22 bzw. den Steueranschluß 60 für die in Fig. 1 linke Arbeitskammer 24 verbunden. Der Rücklaufanschluß des 4/2-Wegeventils V ist über eine Rücklaufleitung 116 an den Vorratsraum 20 angeschlossen. Schließlich ist in Fig. 1 durch eine Hydraulikleitung 118 zwischen dem Inneren 54 des Getriebegehäuses 14 und dem Vorratsraum 20 angedeutet, daß die Stellvorrichtung 10 mit dem Schmier- bzw. Kühlkreislauf des Getriebes verbunden ist bzw. von der Ölwanne des Getriebes aus mit dem Druckmittel versorgt wird.

Die wie oben beschrieben ausgebildete und an eine Druckmittelversorgung angeschlossene Stellvorrichtung 10 arbeitet folgendermaßen.

Soll die Schaltstange 12 für einen Schaltvorgang im Getriebe in Fig. 1 nach links bewegt werden, wird das 4/2-Wegeventil V über eine in den Figuren nicht gezeigte Steuereinheit (CPU) derart angesteuert, daß die Druckleitung 110 hydraulisch mit der Hydraulikleitung 112 kommuniziert, während die Hydraulikleitung 114 mit der Rücklaufleitung 116 hydraulisch verbunden wird (rechte Schaltstellung des 4/2-Wegeventils in Fig. 1). Aus dem Vorratsraum 20 bzw. der Ölwanne des Getriebes wird das Druckmittel nun von der Hydraulikpumpe P über die Ansaugleitung 108, die Druckleitung 110 und die Hydraulikleitung 112 zum Steueranschluß 52 gepumpt. Von dort gelangt das Druckmittel über den Ringkanal 50 und die Durchbrüche 56 im Boden 42 des Einsatzes 30 in die Arbeitskammer 22. Infolge des sich in der Arbeitskammer 22 aufbauenden hydraulischen Drucks, der auf die in Fig. 1 rechte Stirnseite des Kolbenteils 62 des Schaltkolbens 18 wirkt, bewegt sich der Schaltkolben 18 und somit die mit dem Schaltkolben 18 fest verbundene Schaltstange 12 in Fig. 1 nach links. Zugleich wird das sich in der Arbeitskammer 24 drucklos befindende Druckmittel von der Schaltstange 12 und dem Schaltkolben 18, genauer den in Fig. 1 linken Stirnseiten von Schaltstange 12 und Schaltkolben 18 über den Steueranschluß 60 aus der Arbeitskammer 24 herausgeschoben, wonach das verdrängte Druckmittel über die Hydraulikleitung 114, das 4/2-Wegeventil V und die Rücklaufleitung 116 in den Vorratsraum 20 gelangt.

Sobald bei diesem Vorgang der hydraulische Druck in der Arbeitskammer 22 den hydraulischen Druck in dem Hilfsraum 28 um einen vorbestimmten Betrag übersteigt, "klappt" die dynamische Dichtlippe 96 der in den Fig. 1 und 3 rechten Dichtung 82 der Dichtungsanordnung 26 nach radial innen weg und gibt zwischen sich und der Zylinderwandung 44 des Zylinderraums 16 einen idealerweise (kreis)ringförmigen Durchlaß für das Druckmittel frei, über den ein relativ geringer Anteil des Druckmittels aus der Arbeitskammer 22 zusammen mit etwaigen Lufteinschlüssen im Druckmittel, die von der Druckmittelströmung zu der Zylinderwandung 44 transportiert wurden bzw. dahin aufgestiegen sind, in den Hilfsraum 28 strömt. Infolgedessen baut sich in dem Hilfsraum 28 ein hydraulischer Druck auf, der die dynamische Dichtlippe 98 der in den Fig. 1 und 3 linken Dichtung 84 der Dichtungsanordnung 26 zur drucklosen Arbeitskammer 24 hin abdichtend gegen die Zylinderwandung 44 des Zylinderraums 16 preßt. Von dem Hilfsraum 28 wird das Druckmittel mit den Lufteinschlüssen darin sodann über den radial verlaufenden Kanal 102, die Drosselstelle 100 an dessen Ende, den axial verlaufenden Kanal 104 zwischen Schaltstange 12 und Kolbenschaft 64 des Schaltkolbens 18 sowie die Ausnehmung 106 an der Stirnseite 68 des Kolbenschafts 64 (vergl. Fig. 4) in das Innere 54 des Getriebegehäuses 14 und damit den Vorratsraum 20 für das Druckmittel gefördert, der auf an sich bekannte Weise geeignet zur Umgebung hin entlüftet ist.

Die Drosselstelle 100 ist hierbei derart dimensioniert, daß einerseits keine zu große Leckage bzw. kein zu großer Leckvolumenstrom über den Hilfsraum 28 entsteht (Auslegungstendenz: kleiner Drosselquerschnitt), andererseits aber die Strömungsgeschwindigkeit des Druckmittels groß genug ist, um die Lufteinschlüsse im Druckmittel mit der Strömung mitzureißen, und der sich im Hilfsraum 28 dynamisch einstellende hydraulische Druck nicht zu groß wird, was infolge einer stärkeren Verpressung der dynamischen Dichtlippe der zwischen dem Hilfsraum 28 und der nicht druckmittelbeaufschlagten Arbeitskammer gelegenen Dichtung der Dichtungsanordnung 26 mit der Zylinderwandung 44 des Zylinderraums 16 die für eine Verschiebung des Schaltkolbens 18 benötigte Kraft ggf. übermäßig erhöhen würde (Auslegungstendenz: großer Drosselquerschnitt). Zudem ist der Drosselquerschnitt der Drosselstelle 100 mit dem Mindestöffnungsdruck der dynamischen Dichtlippen 96, 98 der Dichtungen 82 bzw. 84 (z.B. 0,2 bar) derart abgestimmt, daß im Hilfsraum 28 ein gewisser "Vakuumeffekt" entsteht, der im Stillstand der Stellvorrichtung 10 auch bei längerer Nichtbetätigung derselben verhindert, daß der Hilfsraum 28 zum Vorratsraum 20 hin "ausläuft".

Soll die Schaltstange 12 für einen Schaltvorgang im Getriebe hingegen in Fig. 1 nach rechts bewegt werden, wird das 4/2-Wegeventil V derart angesteuert, daß die Druckleitung 110 hydraulisch mit der Hydraulikleitung 114 kommuniziert, während die Hydraulikleitung 112 mit der Rücklaufleitung 116 hydraulisch verbunden wird (linke Schaltstellung des 4/2-Wegeventils V in Fig. 1). Aus dem Vorratsraum 20 wird das Druckmittel nun von der Hydraulikpumpe P über die Ansaugleitung 108, die Druckleitung 110 sowie die Hydraulikleitung 114 zum Steueranschluß 60 und somit in die in Fig. 1 linke Arbeitskammer 24 der Stellvorrichtung 10 gepumpt. Aufgrund des sich jetzt in der Arbeitskammer 24 aufbauenden hydraulischen Drucks, der auf die in Fig. 1 linken Stirnseiten von Schaltstange 12 und Kolbenteil 62 wirkt, bewegt sich der Schaltkolben 18 und somit die Schaltstange 12 in Fig. 1 nach rechts. Zugleich wird das sich in der Arbeitskammer 22 drucklos befindende Druckmittel von dem Schaltkolben 18, genauer der in Fig. 1 rechten Stirnseite des Kolbenteils 62 über die Durchbrüche 56 im Einsatz 30, den Ringkanal 50, den Steueranschluß 52, die Hydraulikleitung 112, das 4/2-Wegeventil V und die Rücklaufleitung 116 in den Vorratsraum 20 geschoben.

Sobald bei diesem Vorgang der hydraulische Druck in der Arbeitskammer 24 den hydraulischen Druck in dem Hilfsraum 28 um einen vorbestimmten Betrag übersteigt, "klappt" die dynamische Dichtlippe 98 der in den Fig. 1 und 3 linken Dichtung 84 der Dichtungsanordnung 26 nach radial innen weg und gibt zwischen sich und der Zylinderwandung 44 des Zylinderraums 16 einen ebenfalls idealerweise (kreis)ringförmigen Durchlaß für das Druckmittel frei, über den erneut ein relativ geringer Anteil des Druckmittels aus der Arbeitskammer 24 zusammen mit etwaigen Lufteinschlüssen im Druckmittel, die von der Druckmittelströmung zu der Zylinderwandung 44 transportiert wurden bzw. dahin aufgestiegen sind, in den Hilfsraum 28 strömt. Infolgedessen baut sich in dem Hilfsraum 28 wiederum ein hydraulischer Druck auf, der die dynamische Dichtlippe 96 der in den Fig. 1 und 3 rechten Dichtung 82 der Dichtungsanordnung 26 zur jetzt drucklosen Arbeitskammer 22 hin abdichtend gegen die Zylinderwandung 44 des Zylinderraums 16 preßt. Vom Hilfsraum 28 aus gelangt das Druckmittel dann auf die oben bereits beschriebene Art und Weise wieder in den Vorratsraum 20.

Es ist ersichtlich, daß die Arbeitskammern 22, 24 mithin bei einer Betätigung der Stellvorrichtung 10 auf denkbar einfache Weise über den Hilfsraum 28 zum Vorratsraum 20 hin gespült und somit (zwangs)entlüftet werden.

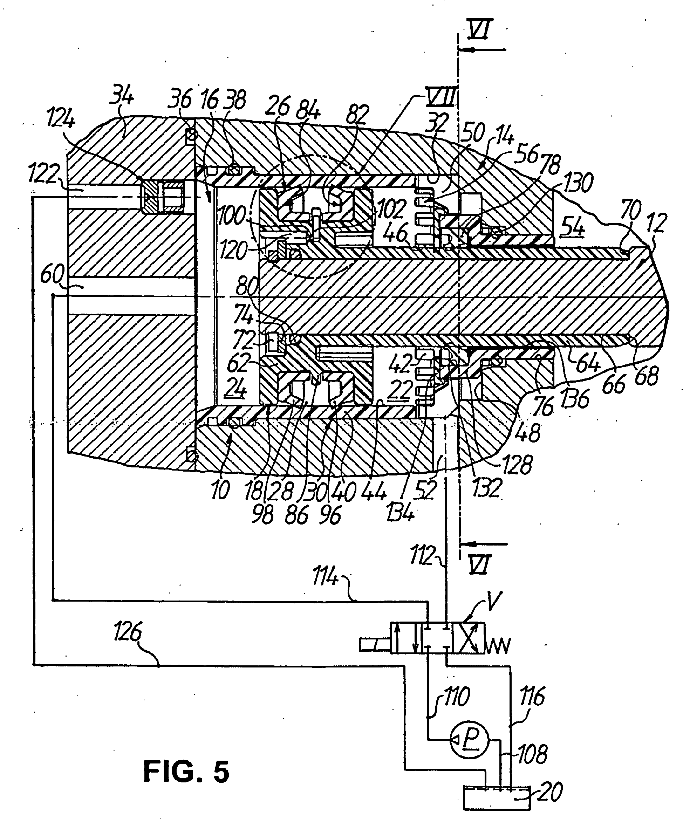

Die Fig. 5 bis 7 zeigen eine hydraulische Stellvorrichtung 10 nach einem zweiten Ausführungsbeispiel, die nachfolgend nur insoweit beschrieben werden soll, als sie sich von dem unter Bezugnahme auf die Fig. 1 bis 4 beschriebenen ersten Ausführungsbeispiel unterscheidet. Bei dem zweiten Ausführungsbeispiel wird die Stellvorrichtung 10 im Gegensatz zum ersten Ausführungsbeispiel von einem von dem Schmier- bzw. Kühlkreislauf des Getriebes getrennten Kreislauf mit dem Druckmittel versorgt und hat deshalb einen etwas anderen Aufbau.

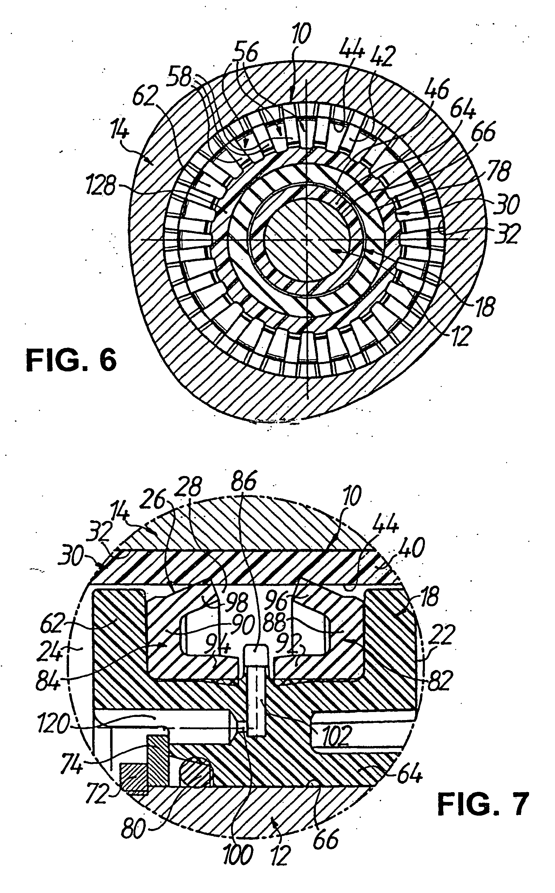

So ist bei dem zweiten Ausführungsbeispiel der Hilfsraum 28 über einen Verbindungskanal 120 dauerhaft mit einer der Arbeitskammern 22, 24 hydraulisch verbunden, im gezeigten Beispiel nämlich der Arbeitskammer 24, die auf der vom Inneren 54 des Getriebegehäuses 14 abgewandten Seite des Schaltkolben 18 liegt. Genauer gesagt verläuft der Verbindungskanal 120 im wesentlichen axial im Schaltkolben 18, wobei der Verbindungskanal 120 mit seinem in den Fig. 5 und 7 linken Ende in der zugeordneten Arbeitskammer 24 mündet, während der Verbindungskanal 120 an seinem anderen, in den Fig. 5 und 7 rechten Ende über die Drosselstelle 100 mit dem im wesentlichen radial verlaufenden Kanal 102 im Schaltkolben 18 hydraulisch verbunden ist. Darüber hinaus ist der Deckel 34 in einem oberen Bereich der Arbeitskammer 24 mit einem weiteren Anschluß 122 versehen, in den eine Blende z.B. in der Form einer handelsüblichen Einpreßblende 124 eingesetzt ist, die zur Minimierung des Verluststroms nur einen kleinen Blendenquerschnitt (beispielsweise 0,6 mm) aufweist. Der Anschluß 122 ist schließlich über eine weitere Hydraulikleitung 126 permanent mit dem Vorratsraum 20 hydraulisch verbunden. Demgemäß ist bei dem zweiten Ausführungsbeispiel keine Verbindung zwischen dem Hilfsraum 28 und dem Inneren 54 des Getriebegehäuses 14 vorgesehen.

Soll die Schaltstange 12 in Fig. 5 nach links bewegt werden, wird die Arbeitskammer 22 wie oben bereits beschrieben über den Steueranschluß 52 mit dem Druckmittel beaufschlagt. In der Folge "klappt" die dynamische Dichtlippe 96 der Dichtung 82 nach radial innen weg bzw. wird in diese Richtung weggebogen, während das in den Hilfsraum 28 einströmende Druckmittel die dynamische Dichtlippe 98 der Dichtung 84 gegen die Zylinderwandung 44 des Zylinderraum 16 preßt, ebenfalls wie bei dem ersten Ausführungsbeispiel. Vom Hilfsraum 28 gelangt das Druckmittel mit den darin ggf. vorhandenen Lufteinschlüssen jetzt aber über den Kanal 102, die Drosselstelle 100 und den Verbindungskanal 120 in die Arbeitskammer 24, in der die Lufteinschlüsse nach oben aufsteigen. Zugleich wird Druckmittel aus der Arbeitskammer 24 durch den sich in Fig. 5 nach links bewegenden Schaltkolben 18 über den Steueranschluß 60 wie vorbeschrieben zum Vorratsraum 20 hin verdrängt.

Wird anschließend die Arbeitskammer 24 über den Steueranschluß 60 mit Druckmittel beaufschlagt, um die Schaltstange 12 in Fig. 5 nach rechts zu verschieben, so gelangt das Druckmittel über den Verbindungskanal 120, die Drosselstelle 100 und den Kanal 102 in den Hilfsraum 28. Dabei kommt es zu einem Druckausgleich zwischen der Arbeitskammer 24 und dem Hilfsraum 28, infolge dessen zu beiden Seiten der dynamischen Dichtlippe 98 der in den Fig. 5 und 7 linken Dichtung 84 der gleiche Druck herrscht, diese mithin nicht "wegklappt" wie bei dem ersten Ausführungsbeispiel, während die dynamische Dichtlippe 96 der in den Fig. 5 und 7 rechten Dichtung 82 gegen die Zylinderwandung 44 des Zylinderraums 16 gepreßt wird. Es entsteht eine Strömung vom Steueranschluß 60 durch die Arbeitskammer 24 zur Einpreßblende 124 im Anschluß 122 hin, die die ggf. vorhandenen Lufteinschlüsse in der Arbeitskammer 24 mit sich reißt und letztere schließlich über die Hydraulikleitung 126 zum Vorratsraum 20 transportiert.

Die Fig. 5 zeigt schließlich noch, daß der die Schaltstange 12 umgebende hohle Kolbenschaft 64 des Schaltkolbens 18 an dem Einsatz 30 geführt sein kann, anstatt an dem Getriebegehäuse 14 wie bei dem ersten Ausführungsbeispiel. Hierzu weist der Einsatz 30 einen sich von dessen Boden 42 in Fig. 5 nach rechts erstreckenden, mit dem Einsatz 30 einstückigen Fortsatz 128 auf, der die Öffnung 76 des Getriebegehäuses 14 bis zum Inneren 54 desselben durchgreift, wobei der Fortsatz 128 an seinem Außenumfang gegenüber der Öffnung 76 mittels eines O-Rings 130 statisch abgedichtet ist. Innenumfangsseitig hat der Fortsatz 128 zunächst einen Absatz 132 zur Aufnahme des dynamischen Dichtelements 78, das dort mittels einer Ringscheibe 134 gehalten ist, die auf geeignete Weise am Boden 42 des Einsatzes 30 befestigt ist, etwa vermittels eines Klebstoffs. Sich an den Absatz 132 in Fig. 5 nach rechts anschließend ist der Fortsatz 128 schließlich noch innenumfangsseitig mit einer Bundbuchse 136 ausgekleidet, die zur Optimierung der Reibpaarung mit dem in der Bundbuchse 136 geführten Kolbenschaft 64 des Schaltkolbens 18, mithin im Hinblick auf gute Gleiteigenschaften vorzugsweise aus Polyetheretherketon (PEEK) besteht. Eine derartige Führung des Kolbenschafts 64 am Einsatz 30 kann prinzipiell auch bei dem ersten Ausführungsbeispiel vorgesehen sein.

### BEZUGSZEICHENLISTE

- 10: Stellvorrichtung
- 12: Schaltstange
- 14: Getriebegehäuse
- 16: Zylinderraum
- 18: Schaltkolben
- 20: Vorratsraum
- 22: Arbeitskammer
- 24: Arbeitskammer
- 26: Dichtungsanordnung
- 28: Hilfsraum
- 30: Einsatz
- 32: Stufenbohrung
- 34: Deckel
- 36: O-Ring
- 38: O-Ring
- 40: Mantelabschnitt
- 42: Boden
- 44: Zylinderwandung
- 46: Öffnung
- 48: Stufe
- 50: Ringkanal
- 52: Steueranschluß
- 54: Inneres des Getriebegehäuses
- 56: Durchbruch
- 58: Steg
- 60: Steueranschluß
- 62: Kolbenteil
- 64: Kolbenschaft
- 66: Absatz
- 68: Stirnseite
- 70: Bund
- 72: Sicherungsring
- 74: Ringscheibe
- 76: Öffnung
- 78: Dichtelement
- 80: O-Ring
- 82: Dichtung
- 84: Dichtung
- 86: Radialsteg
- 88: Grundkörper
- 90: Grundkörper
- 92: statische Dichtlippe
- 94: statische Dichtlippe
- 96: dynamische Dichtlippe
- 98: dynamische Dichtlippe
- 100: Drosselstelle
- 102: Kanal
- 104: Kanal
- 106: Ausnehmung
- 108: Ansaugleitung
- 110: Druckleitung
- 112: Hydraulikleitung
- 114: Hydraulikleitung
- 116: Rücklaufleitung
- 118: Hydraulikleitung
- 120: Verbindungskanal
- 122: Anschluß
- 124: Einpreßblende
- 126: Hydraulikleitung
- 128: Fortsatz
- 130: O-Ring
- 132: Absatz
- 134: Ringscheibe
- 136: Bundbuchse

- P: Hydraulikpumpe
- V: 4/2-Wegeventil

## Patentansprüche

1. Hydraulische Stellvorrichtung (10) für die Betätigung einer Schaltstange (12) insbesondere eines Schaltgetriebes für Kraftfahrzeuge, mit einem in oder an einem Getriebegehäuse (14) vorgesehenen Zylinderraum (16) zur Aufnahme eines mit der Schaltstange (12) wirkverbundenen Schaltkolbens (18), der den Zylinderraum (16) in zwei wahlweise aus einem Vorratsraum (20) für ein Druckmittel mit diesem beaufschlagbare Arbeitskammern (22, 24) unterteilt, die mittels einer am Schaltkolben (18) angeordneten Dichtungsanordnung (26) voneinander getrennt sind, wobei der Zylinderraum (16) von einer Zylinderwandung (44) begrenzt ist, die als Lauffläche für die Dichtungsanordnung (26) dient, **dadurch gekennzeichnet, daß** der Zylinderraum (16) durch einen Einsatz (30) gebildet ist, der in eine Stufenbohrung (32) des Getriebegehäuse (14) eingesetzt ist und einen Mantelabschnitt (40) hat, der mit seinem Innenumfang die Zylinderwandung (44) bildet, und daß die Dichtungsanordnung (26) ventilartig ausgebildet ist, so daß sie bei Druckmittelbeaufschlagung wenigstens einer Arbeitskammer (22) diese mit einem von der Dichtungsanordnung (26) begrenzten Hilfsraum (28) verbindet, der seinerseits mit dem Vorratsraum (20) für das Druckmittel verbindbar ist.

2. Stellvorrichtung (10) nach Anspruch 1, **dadurch gekennzeichnet, daß** die Dichtungsanordnung (26) zwei Dichtungen (82, 84) aufweist, die jeweils zwischen einer der Arbeitskammern (22, 24) und dem Hilfsraum (28) angeordnet sind.

3. Stellvorrichtung (10) nach Anspruch 2, **dadurch gekennzeichnet, daß** jede Dichtung (82, 84) eine elastische Dichtlippe (96, 98) aufweist, die
im Ruhezustand der Stellvorrichtung (10) an einer Zylinderwandung (44) des Zylinderraums (16) anliegt,
von der Zylinderwandung (44) wegbiegbar ist, um einen Durchlaß für das Druckmittel freizugeben, wenn der hydraulische Druck in der jeweils angrenzenden Arbeitskammer (22, 24) um einen vorbestimmten Betrag größer ist als der hydraulische Druck in dem Hilfsraum (28), und
an die Zylinderwandung (44) anpreßbar ist, um gegenüber der Zylinderwandung (44) abzudichten, wenn der hydraulische Druck in dem Hilfsraum (28) um einen vorbestimmten Betrag größer ist als der hydraulische Druck in der jeweils angrenzenden Arbeitskammer (22, 24).

4. Stellvorrichtung (10) nach Anspruch 2 oder 3, **dadurch gekennzeichnet, daß** es sich bei den Dichtungen (82, 84) um an sich bekannte Nutringe handelt, die entgegengesetzt zu ihrer üblichen Einbaulage am Schaltkolben (18) montiert sind.

5. Stellvorrichtung (10) nach einem der vorhergehenden Ansprüche, **dadurch gekennzeichnet, daß** die hydraulische Verbindung zwischen dem Hilfsraum (28) und dem Vorratsraum (20) wenigstens eine Drosselstelle (100) aufweist.

6. Stellvorrichtung (10) nach Anspruch 5, **dadurch gekennzeichnet, daß** der Schaltkolben (18) wenigstens einen im wesentlichen radial verlaufenden Kanal (102) mit zwei Enden aufweist, von denen das eine Ende in dem Hilfsraum (28) mündet, während an dem anderen Ende die Drosselstelle (100) vorgesehen ist.

7. Stellvorrichtung (10) nach einem der vorhergehenden Ansprüche, **dadurch gekennzeichnet, daß** der Schaltkolben (18) einen hohlen Kolbenschaft (64) aufweist, der die Schaltstange (12) umgibt und sich an seinem Außenumfang dynamisch abgedichtet in das Getriebegehäuse (14) hinein erstreckt, wobei zwischen dem Innenumfang des Kolbenschafts (64) und der Schaltstange (12) wenigstens ein Kanal (104) ausgebildet ist, der den Hilfsraum (28) hydraulisch mit dem Inneren (54) des Getriebegehäuses (14) verbindet.

8. Stellvorrichtung (10) nach Anspruch 7, **dadurch gekennzeichnet, daß** der Kanal (104) zwischen Kolbenschaft (64) und Schaltstange (12) am Innenumfang des Kolbenschafts (64) ausgebildet ist.

9. Stellvorrichtung (10) nach Anspruch 7 oder 8, **dadurch gekennzeichnet, daß** der Kolbenschaft (64) im Inneren (54) des Getriebegehäuses (14) an einem Bund (70) der Schaltstange (12) endet, wobei der Kolbenschaft (64) an seiner dem Bund (70) der Schaltstange (12) zugewandten Stirnseite (68) mit wenigstens einer Ausnehmung (106) versehen ist, die den Kanal (104) zwischen Kolbenschaft (64) und Schaltstange (12) mit dem Inneren (54) des Getriebegehäuses (14) hydraulisch verbindet.

10. Stellvorrichtung (10) nach einem der Ansprüche 1 bis 6, **dadurch gekennzeichnet, daß** der Hilfsraum (28) über einen Verbindungskanal (120) dauerhaft mit einer (24) der Arbeitskammern hydraulisch verbunden ist, wobei diese Arbeitskammer (24) ihrerseits über eine Blende (124) permanent mit dem Vorratsraum (20) hydraulisch verbunden ist.

11. Stellvorrichtung (10) nach den Ansprüchen 6 und 10, **dadurch gekennzeichnet, daß** der Verbindungskanal (120) im wesentlichen axial im Schaltkolben (18) verläuft, wobei der Verbindungskanal (120) mit einem Ende in der zugeordneten Arbeitskammer (24) mündet, während der Verbindungskanal (120) an seinem anderen Ende über die Drosselstelle (100) mit dem im wesentlichen radial verlaufenden Kanal (102) im Schaltkolben (18) hydraulisch verbunden ist.

12. Stellvorrichtung (10) nach Anspruch 10 oder 11, **dadurch gekennzeichnet, daß** es sich bei besagter Arbeitskammer (24) um diejenige Arbeitskammer (24) handelt, die auf der vom Inneren (54) des Getriebegehäuses (14) abgewandten Seite des Schaltkolbens (18) liegt.

13. Stellvorrichtung (10) nach einem der vorhergehenden Ansprüche, **dadurch gekennzeichnet, daß** der Einsatz (30) in der Stufenbohrung (32) im Getriebegehäuse (14) mittels eines am Getriebegehäuse (14) befestigten Deckels (34) fixiert ist.

14. Stellvorrichtung (10) nach Anspruch 13, **dadurch gekennzeichnet, daß** der Einsatz (30) im wesentlichen becherförmig ausgebildet ist, mit einem Boden (42), der eine zentrale Öffnung (46) für den Durchtritt der Schaltstange (12) aufweist und mit einer Stufe (48) der Stufenbohrung (32) im Getriebegehäuse (14) einen Ringkanal (50) begrenzt, der mit einem Steueranschluß (52) für die dem Inneren (54) des Getriebegehäuses (14) nächstgelegene Arbeitskammer (22) kommuniziert, wobei der Boden (42) des Einsatzes (30) mit einer Mehrzahl von über den Umfang verteilten Durchbrüchen (56) versehen ist, die die dem Inneren (54) des Getriebegehäuses (14) nächstgelegene Arbeitskammer (22) mit dem Ringkanal (50) verbinden.

15. Stellvorrichtung (10) nach Anspruch 13 oder 14, **dadurch gekennzeichnet, daß** ein die Schaltstange (12) umgebender hohler Kolbenschaft (64) des Schaltkolbens (18) an dem Einsatz (30) geführt ist.

16. Stellvorrichtung (10) nach einem der Ansprüche 13 bis 15, **dadurch gekennzeichnet, daß** der Einsatz (30) aus einem Kunststoff spritzgegossen ist.

17. Stellvorrichtung (10) nach einem der vorhergehenden Ansprüche, **dadurch gekennzeichnet, daß** der Schaltkolben (18) aus einem Kunststoff spritzgegossen ist.

18. Stellvorrichtung (10) nach Anspruch 16 oder 17, **dadurch gekennzeichnet, daß** es sich bei dem Kunststoff um PPA mit einem vorbestimmten Glasfaseranteil handelt.

## Claims

1. Hydraulic actuating device (10) for actuating a shift rod (12) in particular of a gearbox for motor vehicles, comprising a cylinder chamber (16) provided in or on a gear housing (14) for accommodating a shift piston (18) which is actively connected to the shift rod (12) and which divides the cylinder chamber (16) into two working chambers (22, 24) which can selectively be acted upon by a pressure medium from a reservoir (20) for the latter, said working chambers being separated from one another by means of a sealing arrangement (26) arranged on the shift piston (18), wherein the cylinder chamber (16) is bounded by a cylinder wall (44) that serves as a running surface for the sealing arrangement (26), **characterized in that** the cylinder chamber (16) is formed by an insert (30) which is inserted in a stepped bore (32) in the gear housing (14) and has a cylindrical section (40) that forms with its inner circumference the cylinder wall (44), and **in that** the sealing arrangement (26) is designed in a valve-like manner so that, when at least one working chamber (22) is acted upon by the pressure medium, it connects said working chamber to an auxiliary chamber (28) which is delimited by the sealing arrangement (26) and which in turn can be connected to the reservoir (20) for the pressure medium.

2. Actuating device (10) according to claim 1, **characterized in that** the sealing arrangement (26) comprises two seals (82, 84) which are in each case arranged between one of the working chambers (22, 24) and the auxiliary chamber (28).

3. Actuating device (10) according to claim 2, **characterized in that** each seal (82, 84) has an elastic sealing lip (96, 98) which
in the rest state of the actuating device (10) bears against a cylinder wall (44) of the cylinder chamber (16),
can be flexed away from the cylinder wall (44) in order to clear a passage for the pressure medium when the hydraulic pressure in the respective adjoining working chamber (22, 24) is a predetermined amount higher than the hydraulic pressure in the auxiliary chamber (28), and
can be pressed against the cylinder wall (44) in order to provide sealing with respect to the cylinder wall (44) when the hydraulic pressure in the auxiliary chamber (28) is a predetermined amount higher than the hydraulic pressure in the respective adjoining working chamber (22, 24).

4. Actuating device (10) according to claim 2 or 3, **characterized in that** the seals (82, 84) are groove rings known per se which are mounted on the shift piston (18) in the opposite way to their customary installed position.

5. Actuating device (10) according to one of the preceding claims, **characterized in that** the hydraulic connection between the auxiliary chamber (28) and the reservoir (20) has at least one throttle point (100).

6. Actuating device (10) according to claim 5, **characterized in that** the shift piston (18) has at least one essentially radially running channel (102) with two ends, of which one end opens into the auxiliary chamber (28) while the throttle point (100) is provided at the other end.

7. Actuating device (10) according to one of the preceding claims, **characterized in that** the shift piston (18) comprises a hollow piston shaft (64) which surrounds the shift rod (12) and extends into the gear housing (14) in a manner dynamically sealed at its outer circumference, wherein at least one channel (104) is formed between the inner circumference of the piston shaft (64) and the shift rod (12), which channel hydraulically connects the auxiliary chamber (28) to the interior (54) of the gear housing (14).

8. Actuating device (10) according to claim 7, **characterized in that** the channel (104) between the piston shaft (64) and the shift rod (12) is formed on the inner circumference of the piston shaft (64).

9. Actuating device (10) according to claim 7 or 8, **characterized in that** the piston shaft (64) ends at a collar (70) of the shift rod (12) in the interior (54) of the gear housing (14), wherein the piston shaft (64) is provided on its end face (68) facing towards the collar (70) of the shift rod (12) with at least one opening (106) which hydraulically connects the channel (104) between the piston shaft (64) and the shift rod (12) to the interior (54) of the gear housing (14).

10. Actuating device (10) according to one of claims 1 to 6, **characterized in that** the auxiliary chamber (28) is permanently hydraulically connected to one (24) of the two working chambers via a connecting channel (120), wherein this working chamber (24) is in turn permanently hydraulically connected to the reservoir (20) via a restrictor (124).

11. Actuating device (10) according to claims 6 and 10, **characterized in that** the connecting channel (120) runs essentially axially in the shift piston (18), wherein the connecting channel (120) opens at one end into the associated working chamber (24) while the connecting channel (120) at its other end is hydraulically connected via the throttle point (100) to the essentially radially running channel (102) in the shift piston (18).

12. Actuating device (10) according to claim 10 or 11, **characterized in that** said working chamber (24) is the working chamber (24) which is on the side of the shift piston (18) facing away from the interior (54) of the gear housing (14).

13. Actuating device (10) according to one of the preceding claims, **characterized in that** the insert (30) is fixed in the stepped bore (32) in the gear housing (14) by means of a cover (34) attached to the gear housing (14).

14. Actuating device (10) according to claim 13, **characterized in that** the insert (30) is essentially beaker-shaped, with a bottom (42) which has a central opening (46) for the passage of the shift rod (12) and delimits an annular channel (50) with a step (48) of the stepped bore (32) in the gear housing (14), which annular channel communicates with a control connection (52) for the working chamber (22) closest to the interior (54) of the gear housing (14), wherein the bottom (42) of the insert (30) is provided with a plurality of holes (56) distributed over the circumference, which holes connect the working chamber (22) closest to the interior (54) of the gear housing (14) to the annular channel (50).

15. Actuating device (10) according to claim 13 or 14, **characterized in that** a hollow piston shaft (64) of the shift piston (18) surrounds the shift rod (12) and is guided on the insert (30).

16. Actuating device (10) according to one of claims 13 to 15, **characterized in that** the insert (30) is injection-molded from a plastic.

17. Actuating device (10) according to one of the preceding claims, **characterized in that** the shift piston (18) is injection-molded from a plastic.

18. Actuating device (10) according to claim 16 or 17, **characterized in that** the plastic is PPA with a predetermined glass fiber content.

## Revendications

1. Actionneur hydraulique (10) pour l'actionnement d'une tige de commande (12), notamment d'une boite de vitesses à changement de vitesses pour véhicules automobiles, comprenant une chambre de cylindre (16) prévue dans ou sur un carter de boite de vitesses (14) et destinée à recevoir un piston de commande (18) en interaction avec la tige de commande (12) et subdivisant la chambre de cylindre (16) en deux compartiments de travail (22, 24) qui peuvent être alimentés sélectivement avec un fluide de pression à partir d'une chambre de réservoir (20) pour ce fluide, et qui sont séparés l'un de l'autre au moyen d'un agencement d'étanchéité (26) disposé sur le piston de commande (18), la chambre de cylindre (16) étant délimitée par une paroi de cylindre (44) qui sert de surface de déplacement pour l'agencement d'étanchéité (26),
**caractérisé en ce que** la chambre de cylindre (16) est formée par un insert (30) qui est monté dans un alésage étagé (32) du carter de boite de vitesses (14), et possède un tronçon d'enveloppe périphérique (40) qui forme avec sa périphérie intérieure, la paroi de cylindre (44), et **en ce que** l'agencement d'étanchéité (26) est réalisé à la manière d'une soupape, de sorte que lors de l'alimentation en fluide de pression d'au moins un compartiment de travail (22), il relie celui-ci à une chambre auxiliaire (28) qui est délimitée par l'agencement d'étanchéité (26) et peut pour sa part être reliée à la chambre de réservoir (20) pour le fluide de pression.

2. Actionneur hydraulique (10) selon la revendication 1, **caractérisé en ce que** l'agencement d'étanchéité (26) présente deux joints d'étanchéité (82, 84), qui sont disposés respectivement entre l'un des compartiments de travail (22, 24) et la chambre auxiliaire (28).

3. Actionneur hydraulique (10) selon la revendication 2, **caractérisé en ce que** chaque joint d'étanchéité (82, 84) présente une lèvre d'étanchéité (96, 98) élastique, qui
dans l'état de repos de l'actionneur (10), s'applique contre la paroi de cylindre (44) de la chambre de cylindre (16),
peut être repoussée de la paroi de cylindre (44) pour libérer un passage pour le fluide de pression lorsque la pression hydraulique dans le compartiment de travail (22, 24) respectivement adjacent est plus grande d'une valeur prédéterminée que la pression hydraulique dans la chambre auxiliaire (28), et
peut être pressée contre la paroi de cylindre (44) pour assurer l'étanchéité vis-à-vis de la paroi de cylindre (44), lorsque la pression hydraulique dans la chambre auxiliaire (28) est plus grande d'une valeur prédéterminée que la pression hydraulique dans le compartiment de travail (22, 24) respectivement adjacent.

4. Actionneur hydraulique (10) selon la revendication 2 ou 3, **caractérisé en ce qu'**il s'agit, en ce qui concerne les joints d'étanchéité (82, 84), de joints en forme de U à lèvres connus en soi, qui sont montés sur le piston de commande (18) de manière opposée au sens de montage habituel.

5. Actionneur hydraulique (10) selon l'une des revendications précédentes, **caractérisé en ce que** la liaison hydraulique entre la chambre auxiliaire (28) et la chambre de réservoir (20), présente au moins une zone d'étranglement (100).

6. Actionneur hydraulique (10) selon la revendication 5, **caractérisé en ce que** le piston de commande (18) présente au moins un canal (102) s'étendant sensiblement de manière radiale et comprenant deux extrémités dont une débouche dans la chambre auxiliaire (28), tandis qu'à l'autre extrémité est prévue la zone d'étranglement (100).

7. Actionneur hydraulique (10) selon l'une des revendications précédentes, **caractérisé en ce que** le piston de commande (18) présente une tige de piston creuse (64) qui entoure la tige de commande (12) et qui s'étend dans l'intérieur du carter de boite de vitesses (14) en étant rendu étanche dynamiquement sur sa périphérie extérieure, au moins un canal (104) étant formé entre la périphérie intérieure de la tige de piston (64) et la tige de commande (12), et assurant la liaison hydraulique entre la chambre auxiliaire (28) et l'intérieur (54) du carter de boite de vitesses (14).

8. Actionneur hydraulique (10) selon la revendication 7, **caractérisé en ce que** le canal (104) entre la tige de piston (64) et la tige de commande (12) est réalisé sur la périphérie intérieure de la tige de piston (64).

9. Actionneur hydraulique (10) selon la revendication 7 ou 8, **caractérisé en ce que** la tige de piston (64) se termine, à l'intérieur (54) du carter de boite de vitesses (14), sur un épaulement (70) de la tige de commande (12), la tige de piston (64) étant pourvue, sur son côté frontal (68) dirigé vers l'épaulement (70) de la tige de commande (12), d'au moins un évidement (106) qui relie hydrauliquement le canal (104) entre la tige de piston (64) et la tige de commande (12), avec l'intérieur (54) du carter de boite de vitesses (14).

10. Actionneur hydraulique (10) selon l'une des revendications 1 à 6, **caractérisé en ce que** la chambre auxiliaire (28) est reliée hydrauliquement de manière permanente avec l'un (24) des compartiments de travail, par l'intermédiaire d'un canal de liaison (120), ce compartiment de travail (24) étant pour sa part relié hydrauliquement, de manière permanente, à la chambre de réservoir (20) par l'intermédiaire d'un diaphragme (124).

11. Actionneur hydraulique (10) selon les revendications 6 et 10, **caractérisé en ce que** le canal de liaison (120) s'étend sensiblement de manière axiale dans le piston de commande (18), le canal de liaison (120) débouchant, avec une extrémité, dans le compartiment de travail (24) associé, tandis que le canal de liaison (120) est relié hydrauliquement, par son autre extrémité, au moyen de la zone d'étranglement (100), au canal (102) s'étendant sensiblement de manière radiale dans le piston de commande (18).

12. Actionneur hydraulique (10) selon la revendication 10 ou 11, **caractérisé en ce qu'**il s'agit, en ce qui concerne ledit compartiment de travail (24), du compartiment de travail (24) qui se situe sur le côté du piston de commande (18), opposé au côté dirigé vers l'intérieur (54) du carter de boite de vitesses (14).

13. Actionneur hydraulique (10) selon l'une des revendications précédentes, **caractérisé en ce que** l'insert (30) est fixé dans l'alésage étagé (32) du carter de boite de vitesses (14), au moyen d'un couvercle (34) fixé sur le carter de boite de vitesses (14).

14. Actionneur hydraulique (10) selon la revendication 13, **caractérisé en ce que** l'insert (30) est sensiblement réalisé en forme de pot comprenant un fond (42) qui présente une ouverture centrale (46) pour le passage de la tige de commande (12), et délimite avec un épaulement (48) de l'alésage étagé (32) dans le carter de boite de vitesses (14), un canal annulaire (50) communiquant avec un raccord de commande (52) pour le compartiment de travail (22) situé le plus près de l'intérieur (54) du carter de boite de vitesses (14), le fond (42) de l'insert (30) étant pourvu d'une pluralité de passages (56) répartis le long de la périphérie et reliant le compartiment de travail (22) situé le plus près de l'intérieur (54) du carter de boite de vitesses (14), au canal annulaire (50).

15. Actionneur hydraulique (10) selon la revendication 13 ou 14, **caractérisé en ce qu'**une tige de piston (64) creuse du piston de commande (18), qui entoure la tige de commande (12), est guidée dans l'insert (30).

16. Actionneur hydraulique (10) selon l'une des revendications 13 à 15, **caractérisé en ce que** l'insert (30) est réalisé en une matière plastique moulée par injection.

17. Actionneur hydraulique (10) selon l'une des revendications précédentes, **caractérisé en ce que** le piston de commande (18) est réalisé en une matière plastique moulée par injection.

18. Actionneur hydraulique (10) selon la revendication 16 ou 17, **caractérisé en ce que** concernant ladite matière plastique, il s'agit de polyphtalamide (PPA) présentant une proportion prédéterminée de fibres de verre.
